# EUROPEAN PATENT APPLICATION

(11) **EP 1 980 801 A1**
(43) Date of publication of application: **15.10.2008**
(21) Application number: 06834125.4
(22) Date of filing: 06.12.2006
(51) Int. Cl.: F24F 13/28, B01D 46/10

(54) **INDOOR UNIT FOR AIR CONDITIONER**

(30) Priority: 06.12.2005 JP 2005352292
(71) Applicant: Toshiba Carrier Corporation, Tokyo 108-8580 (JP)
(72) Inventor: OZAWA, Tetsuro, 336, Tadehara, Fuji-shi, Shizuoka-ken 416-8521 (JP); SUZUKI, Hideto, 336, Tadehara, Fuji-shi, Shizuoka-ken 416-8521 (JP); SANO, Mitsukuni, 336, Tadehara, Fuji-shi, Shizuoka-ken 416-8521 (JP); MISHIMA, Takechika, 336, Tadehara, Fuji-shi, Shizuoka-ken 416-8521 (JP); OKADA, Kaku, 336, Tadehara, Fuji-shi, Shizuoka-ken 416-8521 (JP)
(74) Representative: Grosse, Rainer
(86) International application number: PCT/JP2006/324370
(87) International publication number: WO 2007/066693

(57) **Abstract**

A heat exchanger (8) and a blower (10) are accommodated in an indoor apparatus body (1), and a front suction port (4) and an upper suction port (5) are provided. A front air filter (17) is provided between the front suction port (4) and the heat exchanger (8) with the front air filter (17) divided, and an upper air filter (20) is provided between the upper suction port (5) and the heat exchanger (8) with the upper air filter (20) divided. An air filter cleaning unit (S) is disposed in a dead space facing a region between the front suction port (4) and the upper suction port (5), and the air filter cleaning unit (S) includes a rotating brush (30) removing dust adhering to the air filters and a dust receiving passage (31) recovering the dust. An air filter moving mechanism (55) is included. The air filter moving mechanism (55) reciprocally moves the front air filter (17) to a position facing the upper air filter (20) while the air filter cleaning unit (S) is interposed, and the air filter moving mechanism (55) reciprocally moves the upper air filter (20) to a position facing the front air filter (17) while the air filter cleaning unit (S) is interposed.

## Description

### Technical Field

The present invention relates to an indoor apparatus for an air conditioner, including means for automatically removing dust collected from indoor air by an air filter from the air filter.

### Background Art

In an indoor apparatus for an air conditioner, indoor air is sucked into a body from a suction port, dust contained in the indoor air is collected by the air filter provided facing the suction port, and only the indoor air is introduced to a heat exchanger to perform heat exchange. The dust collected by the air filter is deposited as a result of continuous running of the air conditioner. If the collected dust is left as it is, the dust obstructs circulation of the indoor air for the heat exchanger, which leads to a decrease in heat exchange efficiency.

In order, therefore, to improve the heat exchange efficiency, ideally, the dust adhering to the air filter needs to be periodically removed. A rotatable front-face panel constituting the front face of the body is provided, and the air filter is exposed when the front-face panel is opened. When a lower end part of the air filter is opened, the air filter is easily detached from the air conditioner body. The air filter can be returned to the original position when the air filter is pushed up into the air conditioner body again after the dust adhering to the air filter is removed.

However, the widely used indoor apparatus for air conditioners of the wall-hanging type apparatus is attached at a high point on a wall surface. Therefore, for example, it is difficult for an aged person or person of low height to open and close a front-face panel and to remove and replace the air filter, and the state in which dust adheres to the air filter is likely to be left as it is.

Jpn. Pat. Appln. KOKAI Publication No. 2004-044933 discloses an air conditioner that includes a means for automatically removing the dust adhering to the air filter. Specifically, the air filter is disposed from a front face to an upper face of a chassis for an inverted V-shaped heat exchanger accommodated in the chassis. Moving means and a dust pickup portion are provided near the top of the heat exchanger. The moving means moves the air filter to the front face and rear face of the chassis. The dust pickup portion scratches the dust in accordance with the movement of the air filter.

### Disclosure of Invention

In the technique disclosed in Jpn. Pat. Appln. KOKAI Publication No. 2004-044933, the long air filter is reciprocally moved within the chassis without drawing the long air filter to the outside of the chassis, whereby the long air filter can be cleaned so as not to spoil the aesthetics. At the same time, it is necessary that sufficient space be ensured to move the air filter on the front face side and rear face side of the chassis. Specifically, in removing the dust, the air filter is moved to a position where a lower end of the front face of the air filter faces an air outlet, and the air filter is returned to move a lower end on a rear-face side of the air filter to a lower end of the rear face of the chassis.

Because the space for moving the air filter is required in both the regions, enlargement of the chassis cannot be avoided. Additionally, a part of the rear face of the air filter does not collect the dust. That is, only the part of the rear face of the air filter faces the dust pickup portion to be held by the dust pickup portion in returning the air filter, thereby also enlarging the air filter.

Because a large air filter is reciprocally moved to pick up the dust, a large driving force is inevitably required for the filter delivery means, and the filter delivery means is mechanistically enlarged, which increases the running cost. Further, because the long air filter is reciprocally moved, it takes a long time to pick up the dust.

Subsequently, it is disadvantageously necessary to access a higher part of the wall surface to take out the dust stored in a dust accommodation portion in the chassis. Further, since the dust is not held firmly, the dust may escape when the dust accommodation portion is taken out from the chassis.

In view of the foregoing, an object of the invention is to provide indoor apparatus for an air conditioner which includes means for automatically removing the dust from the air filter without enlarging the indoor apparatus body, whereby the time taken at the dust removal time is shortened, which reduces the burden.

In order to achieve the object, an indoor apparatus of the invention for an air conditioner, in which suction ports are provided in a front face and an upper face of an indoor apparatus body accommodating a heat exchanger and a blower therein, the front face and the upper face the heat exchanger, and an air filter is provided between the suction ports and the heat exchanger to trap dust from sucked indoor air, wherein: the air filter is interposed between the front-face suction port and upper-face suction port and the heat exchanger, and is supported while being able to be movable upward and frontward; an air filter cleaning unit which is disposed in a space facing a region located between the front-face suction port and the upper-face suction port of the indoor apparatus body, the air filter cleaning unit including a dust removing mechanism and a dust receiving portion, the dust removing mechanism removing the adhering dust from the moving air filter, the dust receiving portion recovering the removed dust; and air filter moving means for moving the air filter while the air filter cleaning unit is interposed, whereby the air filter moving means causes the air filter cleaning unit to clean the air filter.

### Brief Description of Drawings

FIG. 1 is a longitudinal sectional view schematically showing indoor apparatus for an air conditioner according to an embodiment of the invention;
FIG. 2 is a front view showing the indoor apparatus of the embodiment from which a front-face panel is detached;
FIG. 3 is a perspective view showing a frame body assembly of the embodiment;
FIG. 4 is a sectional view showing the frame body assembly of the embodiment;
FIG. 5 is a perspective view showing an air filter cleaning unit and neighboring regions of the air filter cleaning unit of the embodiment;
FIG. 6 is a longitudinal sectional view showing the same regions as those of FIG. 5;
FIG. 7 is a perspective view showing an inside of a box case of the embodiment;
FIG. 8 is a perspective view showing an inside of a dust box of the embodiment;
FIG. 9A is a perspective view showing a rotating brush coupling structure of the embodiment;
FIG. 9B is a perspective view showing one of side parts of the dust box of the embodiment;
FIG. 10A is a perspective view showing one of the side parts of the dust box assembled in an indoor apparatus body of the embodiment;
FIG. 10B is a perspective view showing the other side part of the dust box attached to a frame body assembly of the embodiment;
FIG. 11 is a perspective view partially showing a driving portion of the embodiment;
FIG. 12 is a perspective view showing a gear train constituting a gear assembly of the embodiment;
FIG. 13 is a perspective view partially showing the gear train and a lift mechanism of the embodiment;
FIG. 14 is a perspective view partially showing the air filter cleaning unit and a ventilation unit of the embodiment;
FIG. 15 is a perspective view partially showing an inside of the ventilation unit of the embodiment;
FIG. 16 is a perspective view showing a state in which a cover of the ventilation unit of the embodiment is detached;
FIG. 17A is an explanatory view showing actuation of the gear train of the embodiment;
FIG. 17B is an explanatory view showing actuation of the gear train of the embodiment; and
FIG. 17C is an explanatory view showing actuation of the gear train of the embodiment.

### Best Mode for Carrying Out the Invention

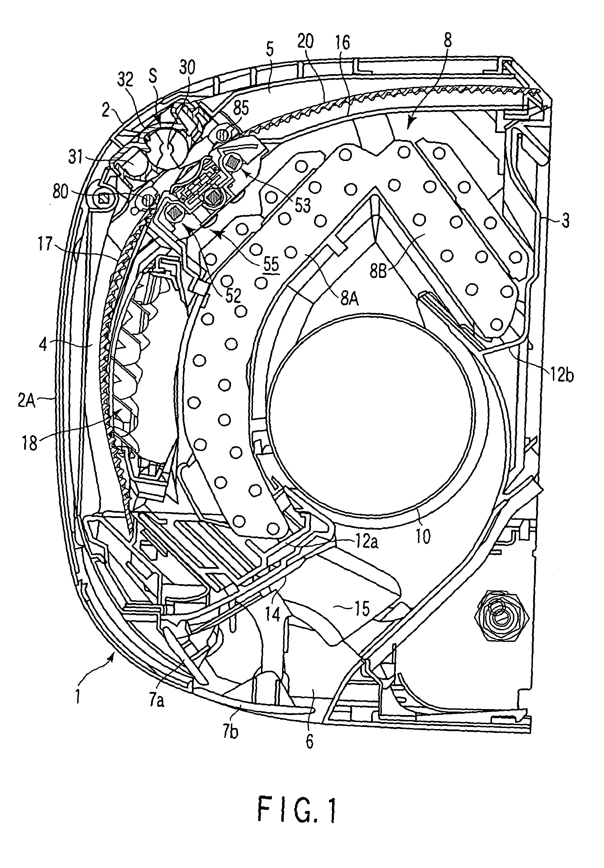

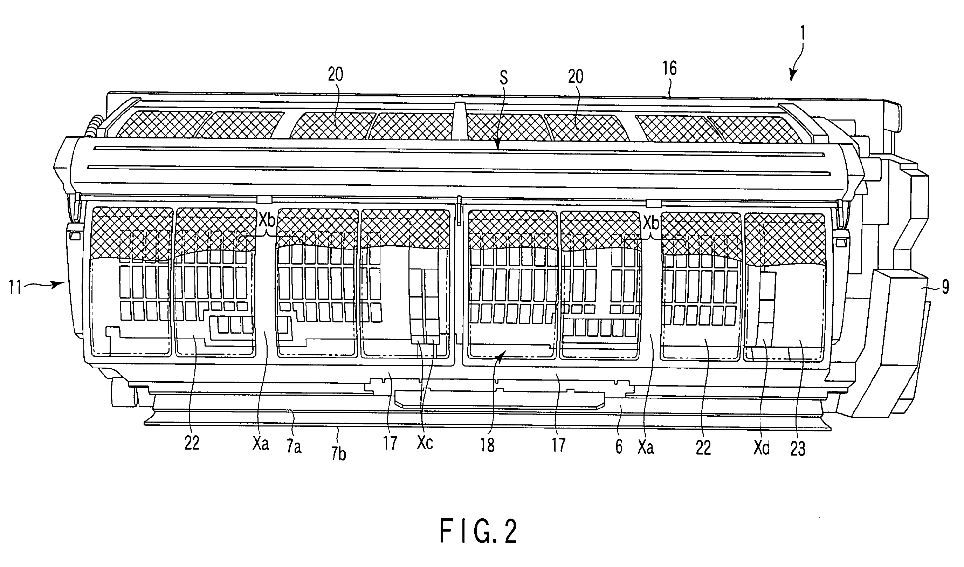

An exemplary embodiment of the invention will be described below with reference to the drawings. FIG. 1 is a longitudinal sectional view schematically showing indoor apparatus for an air conditioner according to an embodiment of the invention, and FIG. 2 is a front view showing an indoor apparatus body 1 from which a front-face panel 2 is detached (in the following description, a component which is not designated by a numeral is not shown).

The indoor apparatus body 1 includes the front-face panel 2 and a rear-plate chassis 3, and the indoor apparatus body 1 is formed into a horizontally long shape. The front-face panel 2 constitutes a front-side chassis of the indoor apparatus body 1. A front suction port 4 is opened in a part on the front face side of the indoor apparatus body 1. A movable panel 2A is fitted in the front-face panel 2 facing the front suction port 4, and the movable panel 2A is supported by an opening and closing driving mechanism.

In the stopped state of the air conditioner, the movable panel 2A is coupled to a surface of the front-face panel 2 to form the same surface, thereby closing the front suction port 4. In the running state, the movable panel 2A is projected toward the front side to generate a gap communicated with a room, and the front suction port 4 is opened to the room. An upper suction port 5 is provided in an upper portion of the indoor apparatus body 1. A frame-shaped crosspiece is fitted in the upper suction port 5, and the upper suction port 5 is partitioned into plural space parts by the crosspiece.

An air outlet 6 is opened in a lower portion of the front face of the indoor apparatus body 1, and two blow-out louvers 7a and 7b are provided in parallel in the air outlet 6. The blow-out louvers 7a and 7b open and close the air outlet 6 by turning attitudes thereof, and the blow-out louvers 7a and 7b can set a heat exchange air blow-out direction according to a running condition.

A heat exchanger 8 is disposed in the indoor apparatus body 1, and an electric component box 9 is provided in one of side parts of the heat exchanger 8. The heat exchanger 8 is formed into a substantially inverted V-shape by a front-side heat exchanger portion 8A and a rear-side heat exchanger portion 8B. The front-side heat exchanger portion 8A is formed into a curved shape while being substantially parallel with the front-face panel 2 with a gap therebetween. The front-side heat exchanger portion 8A faces the front suction port 4 and the upper suction port 5. The rear-side heat exchanger portion 8B is formed into a straight shape, and the rear-side heat exchanger portion 8B faces the upper suction port 5 while inclined with respect to the upper suction port 5.

An indoor blower 10 is disposed between the front-side and rear-side heat exchanger portions 8A and 8B of the heat exchanger 8. The indoor blower 10 includes a fan motor and a transverse fan. The fan motor is disposed in a space at one of side ends of the indoor apparatus body 1. A support shaft of the transverse fan is mechanically coupled to a rotating shaft of the fan motor. A suction/exhaust air system (hereinafter referred to as "ventilation unit") 11 shown in FIG. 2 is provided at a position adjacent to a bearing portion supporting a front end part of the transverse fan and in a space at the other side end of the indoor apparatus body 1.

A lower end portion of the front-side heat exchanger portion 8A is mounted on a front drain pan 12a, and a lower end portion of the rear-side heat exchanger portion 8B is mounted on a rear drain pan 12b. The front and rear drain pans 12a and 12b receive drain water dropping from the heat exchanger portions 8A and 8B respectively, and the front and rear drain pans 12a and 12b drain the drain water to the outside through a drain hose (not shown).

Outer surfaces of side walls of the front and rear drain pans 12a and 12b are partially provided close to the indoor blower 10, thereby constituting a nose for the transverse fan of the indoor blower 10. The side wall parts of the front and rear drain pans 12a and 12b constituting the nose and each side part of the air outlet 6 are coupled by a partition member 14. A space surrounded by the partition member 14 constitutes a blow-out air duct 15 communicating the nose with the air outlet 9.

A frame body assembly 16 is interposed between the front-face panel 2 and the front face side to the upper face side of the heat exchanger 8, and the frame body assembly 16 is attached to the front-face panel 2 through a fitting. Front air filters 17 and 17 and an air cleaner unit 18 are attached in tandem in a front-face part of the frame body assembly 16. The front air filters 17 and 17 are disposed in the front face of the frame while horizontally divided into two. The air cleaner unit 18 is a secondary air filter disposed inside the frame.

Upper air filters 20 and 20 horizontally divided into two are attached to the upper face of the frame body assembly 16. An air filter cleaning unit S is attached between the upper end of each front air filter 17 and the front end of each upper air filter 20.

The front air filter 17 and the air cleaner unit 18 are provided between the front suction port 4 and the front-side heat exchanger portion 8A constituting the heat exchanger 8. The upper air filter 20 is provided between the upper suction port 5 and a part of front-side heat exchanger portion 8A and the rear-side heat exchanger portion 8B. Accordingly, the air filter cleaning unit S is disposed while facing regions located between the front suction port 4 and the upper suction port 5.

The air filter cleaning unit S is formed so as to have the same width as those of the front air filter 17 and upper air filter 20, and the air filter cleaning unit S has a certain thickness in a front-back direction. The air filter cleaning unit S is disposed at a position where the front face part and the upper face part of the front-face panel 2 intersect each other, i.e., in a space of a corner part which is a dead space inevitably formed between the front-face panel 2 and the heat exchanger 8.

Accordingly, the frame body assembly 16 to which the front air filter 17, the air cleaner unit 18, the upper air filter 20, and the air filter cleaning unit S are attached can directly be attached to the front-face panel of the indoor apparatus body having the conventional configuration. In other words, the air conditioner including an automatic air filter cleaning function can be formed by attaching the frame body assembly 16 to the existing indoor apparatus body, and the indoor apparatus body 1 can commonly be used.

The air filter included in the existing indoor apparatus body 1 is formed by one sheet in order to face the front suction port 4 and the upper suction port 5. On the other hand, in the embodiment, the air filter is divided into the front air filter 17 and the upper air filter 20.

Each of the front air filter 17 and the upper air filter 20 is horizontally divided into two in relation to an intermediate part in a width direction of the heat exchanger 8, and the air filter of the embodiment is formed by the four air filters in total. Usually, the front air filter 17 is slightly larger than the upper air filter 20 in a size in a longitudinal direction.

In each surrounding frame of the divided air filters 17 and 20, a width of a center reinforcing crosspiece Xa is larger than those of other surrounding frames and reinforcing crosspieces. At a midpoint of a width, the center reinforcing crosspiece Xa is orthogonal to upper and lower side parts along the width direction of the body. A mesh portion Xb having a predetermined mesh is provided in each opening formed between the frames.

The air cleaner unit 18 includes a pair of electric dust collectors 22 and 22 and a dust collector power supply portion 23. The electric dust collectors 22 and 22 are provided in parallel. The dust collector power supply portion 23 is disposed in a side part of one (right side of FIG. 2) of the electric dust collectors 22 and 22. The electric dust collectors 22 and 22 are formed into the same size and shape, and the electric dust collector 22 includes a charge-side electrode giving a charge to the dust in the circulating air and a dust-side electrode trapping the charged dust. A deodorant adsorbing an odor component contained in the air is applied to a surface of each electrode, and each electrode which is an electric dust collector having both a dust collecting function and a deodorizing function.

Each electric dust collector 22 is detachably attached to an air cleaner unit accommodation portion 16a of the frame body assembly 16, and the dust collector power supply portion 23 is fixed to the air cleaner unit accommodation portion 16a of the frame body assembly 16 to be electrically connected to electric components in the electric component box 9. Terminal portions Xc are projected from right and left side parts of each electric dust collector 22. In the state in which the terminal portions Xc are attached to the air cleaner unit accommodation portion 16a of the frame body assembly 16, the terminal portions Xc are engaged with each other and electrically connected to act as one electric dust collector.

A connection portion Xd electrically connected to the terminal portion Xc of the electric dust collector 22 is provided in the side part of the dust collector power supply portion 23. Each electric dust collector 22 may be attached to either the right position or the left position, and each electric dust collector 22 is electrically connected to the dust collector power supply portion 23 while attached to the frame body assembly 16.

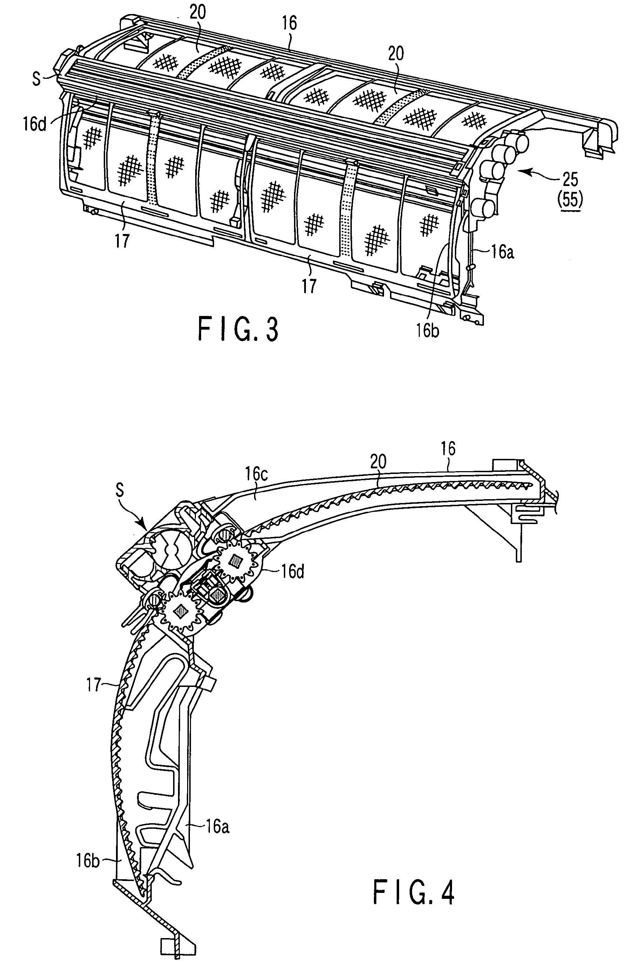

FIG. 3 is a perspective view showing the frame body assembly 16, and FIG. 4 is a sectional view showing the frame body assembly 16.

In FIG. 3, the front air filter 17, the upper air filter 20, and the air filter cleaning unit S are shown while the air cleaner unit 18 is omitted. FIG. 4 shows schematic sections of the front air filter 17, upper air filter 20, air filter cleaning unit S, and air cleaner unit accommodation portion 16a.

The frame body assembly 16 is molded according to an outer frame shape of the front-face panel 2. The frame body assembly 16 is formed by a frame body, and the frame body includes longitudinal frames located in right and left side parts and horizontal frames located in a central part, a lower part of the front face, and a rear face part to act as a bridge between the side parts. A part of or all the horizontal frames located in the lower part of the front face and the rear face part may be omitted while the horizontal frame located in the central part is provided to fix the lower-part sides of the front faces and the rear-face sides in both the side parts to the rear-plate chassis 3 of the indoor apparatus body 1. The point is a frame body including the longitudinal frames on both the side parts and the horizontal frame in the central part acting as the bridge between the side parts.

Only the rear face part of the frame body has the total length facing the total length in the width direction of the indoor apparatus body 1, and the frame body is formed according to the width of the heat exchanger 8 to face the heat exchanger 8 in the central part and the lower part of the front face. The shape of the frame body is molded according to the sectional shape of the front-face panel 2 when viewed from the side part. The opening is formed between the frame bodies so as to face the front suction port 4 and the upper suction port 5.

The opening on the front-face side of the frame body assembly 16 constitutes the air cleaner unit accommodation portion 16a in which the air cleaner unit 18 is attached inside the frame body, the divided front air filter 17 is attached onto the front-face side of the opening, and a front-side air filter accommodation portion 16b is also provided on the front-face side of the opening. The front-side air filter accommodation portion 16b includes a space in which the upper air filter 20 can be extended to the front face part of the front air filter 17 in the front face of the frame body.

The upper air filter 20 divided inside the frame body is attached onto the upper-face side of the frame body assembly 16, and an upper-side air filter accommodation portion 16c in which the front air filter 17 can be extended is provided on the upper-face side of the upper air filter 20. In the side parts and a central partition part of the upper-side air filter accommodation portion 16c, the frame body constitutes a guide portion movably supporting the air filters 17 and 20.

As described later, in a normal state in which dust removing running is not performed on the front air filter 17, an upper end of each front air filter 17 is inserted into and supported by the air filter cleaning unit S. Similarly, in the normal state (non-dust removing running state) of each upper air filter 20, a front end of each upper air filter 20 is inserted into and supported by the air filter cleaning unit S.

When the front-face panel 2 of the indoor apparatus body 1 is opened, the front and upper air filters 17 and 20 are easily detachable from the air filter accommodation portions in the front face and the upper face. The pair of electric dust collectors 22 constituting the air cleaner unit 18 is also easily detachable from the air cleaner unit accommodation portion 16a.

Except for a part (sealing member 34) of the air filter cleaning unit S, the air filter cleaning unit S is configured to be detachable from an air filter cleaning unit attaching part 16d provided between a front-side air filter accommodation portion and an upper-side air filter accommodation portion of the frame body assembly 16.

Thus, the air cleaner unit accommodation portion 16a in which the air cleaner unit 18 is disposed on the front-face side of the frame body assembly 16 is formed, and the front-side air filter accommodation portion 16b in which the front air filter 17 is disposed in front of the air cleaner unit 18 is formed. Therefore, it is not necessary for the attaching frames to be separately provided in front of the heat exchanger to attach the air cleaner unit, unlike the conventional technique, so that productivity of the air conditioner can be improved.

Particularly, as shown in FIG. 3, a driving portion 25 is attached to a region facing the air filter cleaning unit S, and the region is located on one of the side parts of the frame body assembly 16. The driving portion 25 includes a driving source and a driving mechanism which drive the air filter cleaning unit S, and an air filter moving mechanism (air filter moving means) 55. The electric component box 9 is disposed in the side part of the driving portion 25.

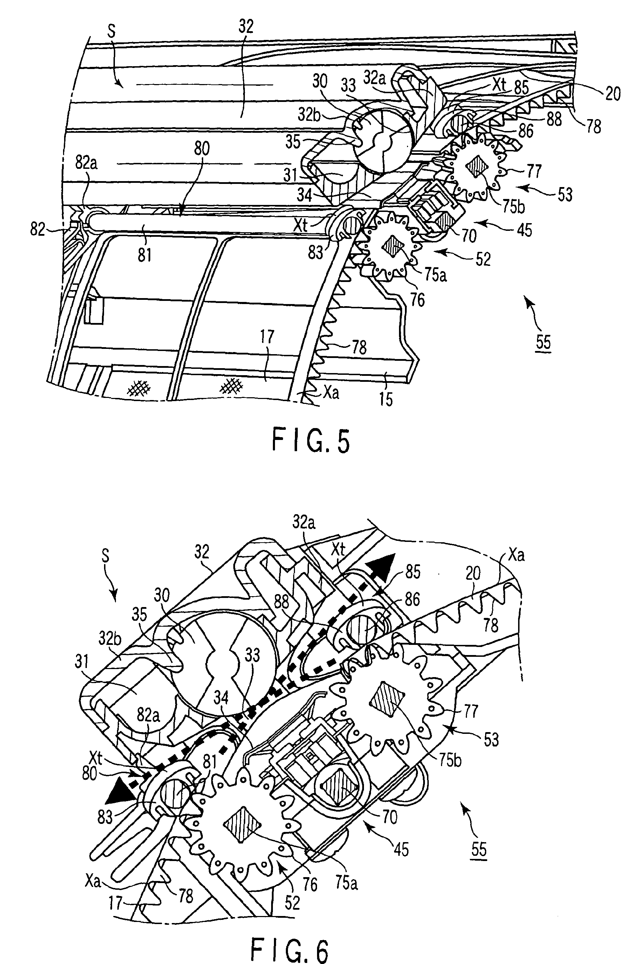

FIG. 5 is a perspective view showing the air filter cleaning unit S and neighboring regions of the air filter cleaning unit S, and FIG. 6 is a longitudinal sectional view showing the same regions as those of FIG. 5.

The air filter cleaning unit S includes a rotating brush (dust removing mechanism) 30, a dust box 32, and a sealing member 34. The rotating brush 30 removes the dust adhering to the front air filter 17 and upper air filter 20. The dust box 32 accommodates the rotating brush 30 therein, and the dust box 32 includes a dust receiving passage (dust receiving portion) 31 collecting the dust removed by the rotating brush 30. The sealing member 34 opens and closes an opening 33 provided in the dust box 32.

The dust box 32 is formed by a combination of a box case 32a and a box cover 32b whose surfaces facing each other are opened, and the dust box 32 accommodates the rotating brush 30 so as to surround the rotating brush 30 in an axial direction. The opening 33 is provided in a lower face of the box case 32a, and the rotating brush 30 is partially exposed from the opening 33.

The sealing member 34 is disposed in a lower region of the opening 33 while facing the opening 33. The sealing member 34 is made of an elastic material such as synthetic rubber, and the sealing member 34 is supported by a lift mechanism 45. Usually, the sealing member 34 is located at a position where the sealing member 34 does not contact the rotating brush 30 partially exposed from the opening 33, and the sealing member 34 closes the opening 33 by the actuation of the lift mechanism 45.

The dust receiving passage 31 is a space part which is formed in a side part of the rotating brush 30 and in the axial direction of the rotating brush 30, and the dust receiving passage 31 is entirely closed except for the opening 33 where a circumferential surface of the rotating brush 30 is partially exposed. In the dust receiving passage 31, a passage surface is formed below the shaft center of the rotating brush 30 to surely receive the dust.

In the box cover 32b constituting the dust box 32, a scratching projection 35 is projected between the dust receiving passage 31 and the region in which the rotating brush 30 is accommodated. The scratching projection 35 is always inserted into a tips of the hairs of the rotating brush 30 over the axial direction of the rotating brush 30, and the scratching projection 35 is located at the position where the tips of the hairs slide and contact the scratching projection 35 in accordance with the rotation of the rotating brush 30.

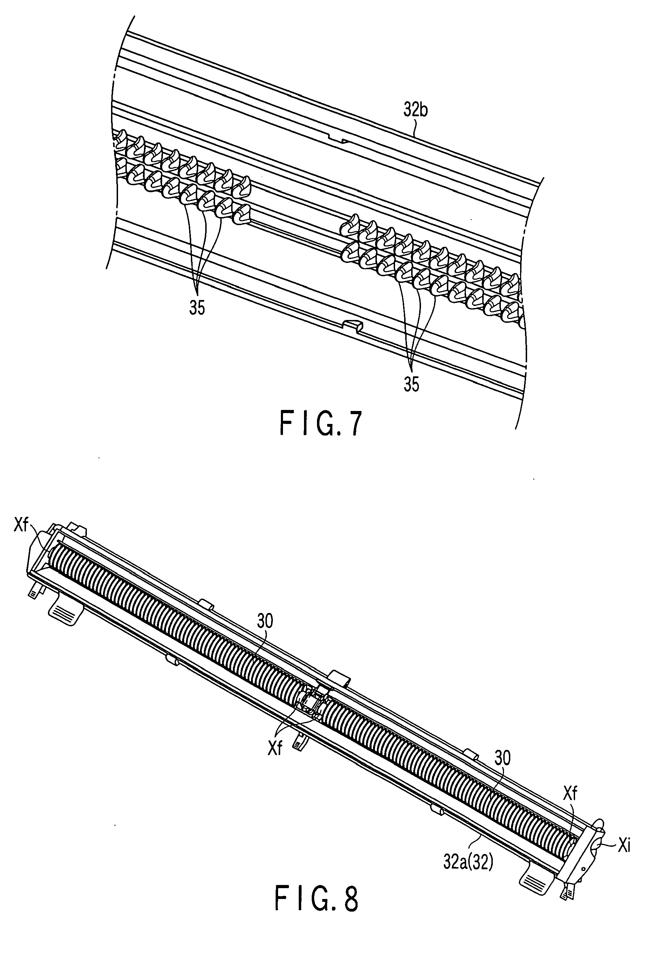

FIG. 7 is a perspective view partially showing the inside of the box cover 32 in order to explain the scratching projection 35.

The scratching projection 35 is integral with the box cover 32b over the width direction of the box cover 32b, and the scratching projection 35 is projected with a predetermined distance from the box cover 32b. Accordingly, the scratching projection 35 is formed into a comb shape, and the dust adhering to the tips of the hairs of the rotating brush 30 is scratched out in accordance with the rotating of the rotating brush 30. The dust scratched out from the rotating brush 30 falls onto the dust receiving passage 31 because of the structure of the dust box 32.

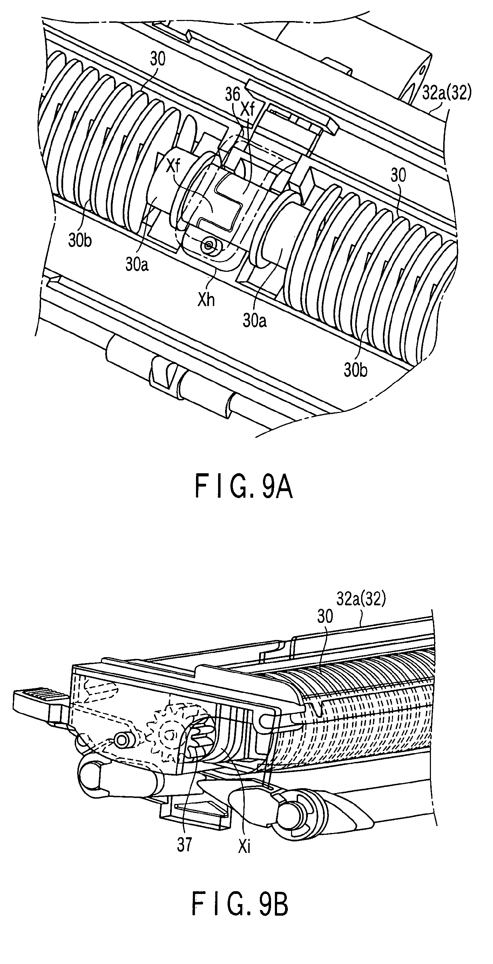

FIG. 8 is a perspective view showing the dust box from which the box cover 32b is detached, FIG. 9A is a perspective view showing the coupling structure of the rotating brush 30, and FIG. 9B is a perspective view showing one of side parts of the dust box 32.

The rotating brush 30 is formed as a horizontally-divided unit structure while facing the horizontally-divided front air filter 17 and upper air filter 20. That is, each axial length of the divided rotating brushes 30 and 30 is equal to the length in each width direction of the divided front and upper air filters 17 and 20, and the divided rotating brushes 30 and 30 are disposed at the same positions as the divided front air filter 17 and upper air filter 20.

Each divided rotating brush 30 includes a shaft portion 30a and plural brush portions 30b which are provided at predetermined intervals in the circumferential surface of the shaft portion 30a and planted in a spiral form in the axial direction. A bifurcated coupling portion Xf is formed at each side end of the shaft portion 30a of the divided rotating brush 30. As shown in FIG. 9A, in the divided rotating brushes 30, the coupling portions Xf can be coupled in a fingertip manner by engaging the coupling portions Xf with each other.

At this point, when the rotating brush 30 is inserted into the box case 32a, the coupling portion Xf of the divided rotating brush 30 is supported by a bearing portion Xh provided in the box case 32a. The coupling portions Xf of the divided rotating brushes 30 are rotatably supported in the box case 32a by fitting a pressing cover 36 in the bearing portion Xh.

FIG. 9B shows an enlarged view of one of side parts (right side part of FIG. 8) of the dust box 32. A brush coupling gear 37 is rotatably supported in the side face of the dust box 32 so as to be exposed to the outside from the side face, and the surroundings of the brush coupling gear 37 are covered except for a notch opening Xi. When the divided rotating brushes 30 are coupled to each other to be inserted into the dust box 32, one of the divided rotating brushes 30 is coupled to the brush coupling gear 37 through the coupling portion Xf.

Thus, because of the configurations of the rotating brush 30 and dust box 32, the rotating brush 30 is detachably attached to the dust box 32, and the rotating brush 30 is rotatably supported by the dust box 32 while attached to the dust box 32. The rotating brush 30 can be divided into two rotating brushes, and the rotating brushes 30 can freely be coupled to each other.

Since the opening 33 is provided in the dust box 32, the rotating brush 30 is exposed to the opening 33, and the opening 33 faces the surrounding frames of the divided front and upper air filters 17 and 20 or the mesh portion Xb provided between the intermediate frames, the rotating brush 30 can surely be brought into contact with the surfaces of the mesh portions Xb of the front air filter 17 and upper air filter 20.

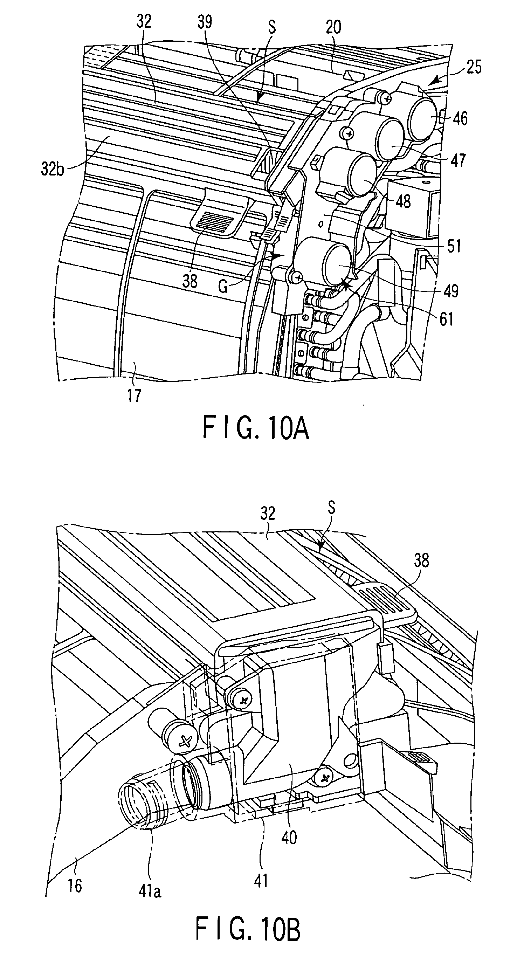

FIG. 10A is a perspective view showing one of the side parts of the dust box 32 assembled in the indoor apparatus body 1, and FIG. 10B is a perspective view showing the other side part of the dust box 32 attached to the frame body assembly 16.

Grip portions 38 are integrally provided in both the side parts of the dust box 32 respectively, which eases, by gripping the grip portions 38 with hands, attachment of the air filter cleaning unit S accommodating the rotating brush therein to the air filter cleaning unit attaching portion 16d of the frame body assembly 16, and detaching the air filter cleaning unit S from the air filter cleaning unit attaching portion 16d.

As shown in FIG. 10A, a rectangular air entrance hole 39 is made in the box cover 32b. The box cover 32b is located in one (right-side part) of the side parts of the dust box 32, and the box cover 32b constitutes the upper face of the dust box 32. The air entrance hole 39 is provided so as to face the dust receiving passage 31, and the air entrance hole 39 and the dust receiving passage 31 are located so as to be communicated with each other.

As shown in FIG. 10B, a dust outlet cover 40 is integrally attached to the other side part of the dust box 32. The dust outlet cover 40 is provided at a tail end part of the dust receiving passage 31 and communicated with the air entrance hole 39 through the dust receiving passage 31. The dust outlet cover 40 is accommodated in an outlet box 41 provided in the frame body assembly 16 with the air filter cleaning unit S attached to a predetermined region of the frame body assembly 16.

The connection port 41a is integrally provided in the outlet box 41, and a connection hose 42 is connected to the connection port 41a and communicated with the ventilation unit 11 as described later. Accordingly, one of the end parts of the dust receiving passage 31 formed in the dust box 32 is communicated through the air entrance hole 39 with the outside of the air filter cleaning unit S, which is the outside of the dust box 32, and the other end part of the dust receiving passage 31 is communicated with the ventilation unit 11 through the dust outlet cover 40, the outlet box 41, and the connection hose 42.

The dust box 32 having the above-described configuration is molded by an antistatic resin material, and an antibacterial treatment is performed on the dust box 32. Therefore, adhesion of dust and generation of mold are prevented to maintain a hygienic state for a long time. Similarly, an antibacterial treatment is performed on the rotating brush 30 to prevent the adhesion of dust and the generation of mold, and a hygienic state can be maintained for a long time.

Additionally, a smoothing surface treatment is performed on a dust contact part such that the dust is smoothly moved in the dust box 32. Particularly, the cross-section is designed such that a thrust diameter is not lower than 12 mm over substantially the whole range of the dust receiving passage 31, and the dust receiving passage 31 is configured such that a pressure loss is suppressed to a small level to smooth a wind flow in actually performing dust removing. The radius of curved parts of the dust receiving passage 31 in contact with the flow of wind is 2 mm or more, which allows to surely prevent the generation of such a trouble that dust adheres to the inner surface of dust receiving passage 31.

As described later, the dust box opening 33 is closed by the sealing member 34 to discharge the dust in the dust receiving passage 31 to the ventilation unit 11. As a result of various experiments, it was found that the dust in the dust receiving passage is surely moved by setting a wind speed at 2 m/s or more at the tail end of the dust receiving passage 31.

As shown in FIG. 10A (also shown in FIG. 3), the driving portion 25 includes first to fourth driving motors 46 to 49, which are four driving sources, and a gear assembly G. The driving motors 46 to 49 are attached to the side-face part of the gear assembly G, and the gear assembly G includes a casing 51 accommodating a gear train therein.

The first driving motor 46 and second driving motor 47 shown in FIGS. 5 and 6 are driving sources of a front moving mechanism 52 and an upper moving mechanism 53 respectively. The front moving mechanism 52 moves the front air filter 17 and the upper moving mechanism 53 moves the upper air filter 20 as described later. The front moving mechanism 52 and the upper moving mechanism 53 constitute an air filter moving mechanism 55.

In the air filter moving mechanism 55, originally one large driving motor is enough to ensure the torque for driving the front and upper moving mechanisms 52 and 53. However, when the large motor is attached to the frame body assembly, the large motor interferes with the electric component box 9 and front-face panel 2 because the large motor has a large diameter. Therefore, two small driving motors 46 and 47 having a torque half the necessary torque are prepared to solve the trouble with the attaching space.

Referring to FIG. 10A, the third driving motor 48 constitutes a brush driving mechanism driving the rotating brush 30. The fourth driving motor 49 is used to drive a switch mechanism 61. The switch mechanism 61 switches between driving forces of the first and second driving motors 46 and 47 such that the driving force is transmitted to the front moving mechanism 52 or the upper moving mechanism 53.

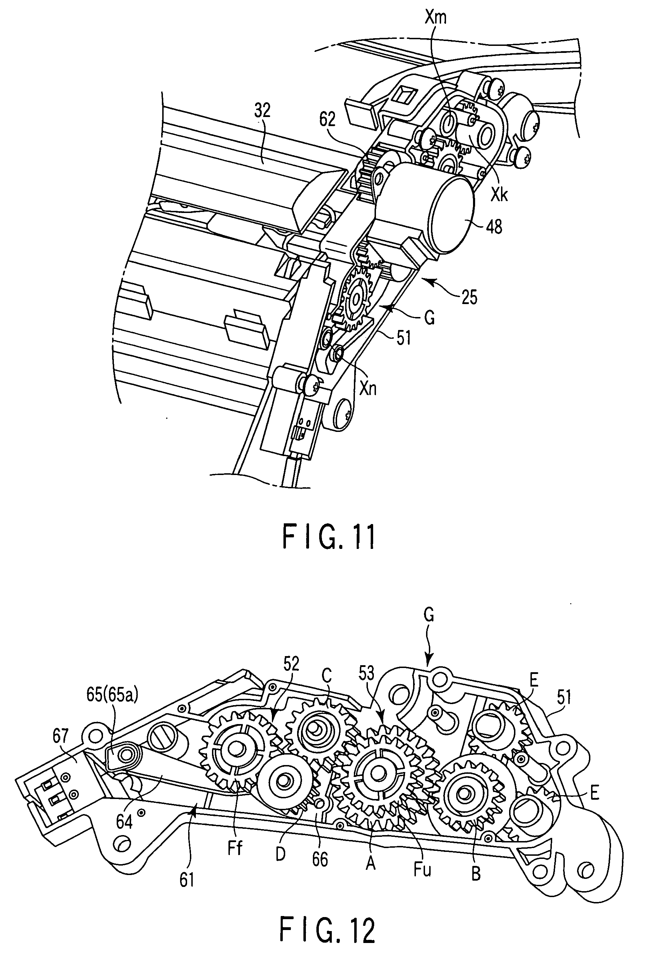

FIG. 11 is a perspective view partially showing the driving portion 25. In FIG. 11, only the third driving motor 48 is shown while other driving motors are omitted, and a part of the gear train is shown while the side-face part of the gear case 51 constituting the gear assembly G is detached. However, FIG. 11 shows that a support seat Xk of the first driving motor 46 and a support seat Xm of the second driving motor 47 are provided close to each other and a support seat Xn of the fourth driving motor 49 is provided in a lower end part of the casing 51.

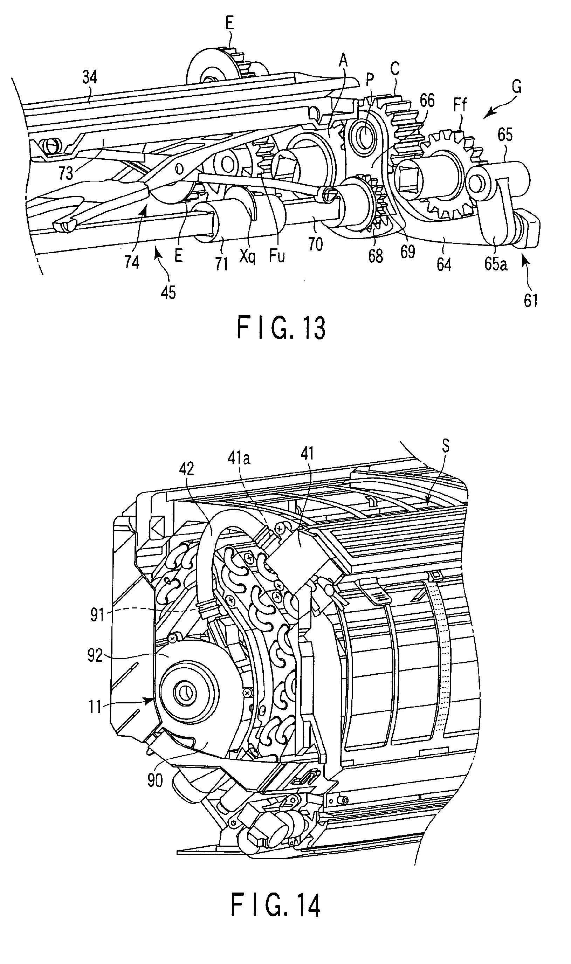

A rotating shaft of the third driving motor 48 is fitted in a driving gear, and a brush driving gear 62 engaged with the driving gear is supported while projected from an end face of the third driving motor 48. The brush driving gear 62 is partially exposed from the notch opening Xi of the cover provided in the side face of the dust box 32 shown in FIG. 9B, thereby engaging the brush driving gear 62 with the brush coupling gear 37 coupled to the rotating brush 30. The third driving motor 48 and the brush driving gear 62 constitute the brush driving mechanism. Other gears shown in FIG. 11 are described with reference to FIGS. 12 and 13.

FIG. 12 is a perspective view showing a gear train constituting the gear assembly G. FIG. 13 is a perspective view partially showing the gear train while the side-face part of the casing 51 of FIG. 12 is omitted, and FIG. 13 is a perspective view partially showing the lift mechanism 45 supporting the sealing member 34.

A pair of gears E having the same gear diameter is supported with a predetermined interval in a corner part on the right side of the casing 51 shown in FIG. 12. The rotating shafts of the first driving motor 46 and second driving motor 47 are inserted into shaft portions of the gears E from the side face of the casing 51, and the motors 46 and 47 are attached to the side face of the casing 51. The rotating shafts of the first and second driving motors 46 and 47 are projected from the support seats Xk and Xm, and the rotating shafts are fitted in and fixed to the gears E respectively.

The gears E are engaged with a gear which is partially shown and supported by the casing 51, and a gear B is integrally provided at the backside of the gear. The gear B is engaged with an adjacent gear A having a large diameter, and an upper-part gear Fu having a small diameter is provided coaxially with the gear A.

Although the gear A and the upper-part gear Fu are coaxially provided, the gear A is supported by a support shaft projected from the side face of the casing 51, and an end part of the support shaft constituting the upper moving mechanism 53 is fitted in the upper-part gear Fu. Accordingly, the gear A and the upper-part gear Fu are separately rotatable.

A gear C engaged with the gear A is supported in the casing 51. A gear D is engaged with the gear C, and the gear D is supported at a front end of a driving arm 64 constituting the switch mechanism 61. A front-part gear Ef is supported in a symmetrical relation to the upper-part gear Fu about the gear C. The end part of the support shaft constituting the front moving mechanism 52 is fitted in the front-part gear Ef.

Thus, the air filter moving mechanism 55 including the front moving mechanism 52 and the upper moving mechanism 53 is formed by a combination of the gear train G and the first and second driving motors 46 and 47.

A rotating shaft of the fourth driving motor 49 (not shown) is projected to the inside through the casing 51, and the rotating shaft is fitted in and fixed to a base end part of a driving lever 65. The driving lever 65 includes a tongue piece portion 65a which is integrally extended from the base end part toward a direction orthogonal to the axial direction, and a base end part of the driving arm 64 is rotatably coupled to a front end of the tongue piece portion 65a.

The switch mechanism 61 includes the fourth driving motor 49, the driving lever 65, the driving arm 64, and the gear D. That is, the driving lever 65 and the driving arm 64 are integrally rotated according to a rotation direction of the fourth driving motor 49, thereby changing the position of the gear D at the front end of the driving arm 64.

The front-end part of the driving arm 64 and the gear D constituting the switch mechanism 61 are rotatably supported in a lower-end part of the gear arm 66 through a pin. An upper-end part of the gear arm 66 is supported by the casing 51 through a support shaft part p, and the gear C is also supported by the support shaft part p.

That is, the gear arm 66 and the gear C are rotatable about the support shaft part p, and the gear D and the front-end part of the driving arm 64 are rotatably coupled to the lower-end part of the gear arm 66. Therefore, the gear D is always engaged with the gear C irrespective of a rotation attitude of the gear arm 66.

In the state in which the driving arm 64 is rotated by the fourth driving motor 49 through the driving lever 65, while the gear D coupled to the driving arm 64 is engaged with the gear C, the gear D can be engaged with the upper-part gear Fu or the front-part gear Ef, or the gear D can select the position where the gear D is not engaged with the gears Fu and Ff.

As shown in FIG. 12, a micro switch 67 is attached in a corner portion of the casing 51. The driving arm 64 contacts an operator of the micro switch 67 to turn on the micro switch 67 depending on the position at which the driving arm 64 is rotated and displaced, and a detection signal is sent to a control portion.

The driving arm 64 turns on the micro switch 67 when the gear D supported by the driving arm 64 is located at the position where the gear D is not engaged with the upper-part gear Fu and the front-part gear Ef. In other words, when the micro switch 67 is turned off, the gear D is engaged with either the upper-part gear Fu or the front-part gear Ff.

The gear arm 66 constituting the switch mechanism 61 is also used as the lift mechanism 45 supporting the sealing member 34. As shown in FIG. 13, the lower-end portion of the gear arm 66 has a predetermined curvature radius about the support shaft part p, and an inner gear portion 68 is provided on an inner surface side of the gear arm 66. A switching gear 69 is engaged with the inner gear portion 68, and an end part of a sealing support shaft 70 is fitted in and fixed to the switching gear 69. The sealing support shaft 70 is provided while piercing through the side face of the casing 51.

The sealing support shaft 70 is supported by a bearing attached to the frame body assembly 16, and the sealing support shaft 70 is provided on the lower-face side of the sealing member 34 while facing the sealing member 34 in a lengthwise direction of the sealing member 34. Accordingly, the switching gear 69 is also rotated when the fourth driving motor 49 constituting the switch mechanism 61 is driven to rotate the gear arm 66 through the driving lever 65 and driving arm 64.

A seal driving cam 71 is provided in a predetermined region of the sealing support shaft 70. The seal driving cam 71 is formed into a cylindrical shape as a whole, and the seal driving cam 71 includes a semi-circular plate-shaped cam portion Xq radially projected in a part of a circumferential surface.

On the other hand, the sealing member 34 is attached to a seal base 73, and the seal base 73 is supported by a seal guide mechanism 74 having a so-called pantograph structure. The seal guide mechanism 74 is provided in the frame body assembly 16. The seal guide mechanism 74 is folded into a flat shape in a normal attitude in which a lift force is not applied, and the seal guide mechanism 74 is deformed upward to push up the sealing member 34 along with the seal base 73 in the state in which the lift force is applied upward.

The seal driving cam 71 is formed in a part of the seal guide mechanism 74 so as to be brought into contact with and separated from the seal guide mechanism 74. When the seal driving cam 71 is brought into contact with a part of the seal guide mechanism 74, the seal guide mechanism 74 rises to push up the sealing member 34. When the seal driving cam 71 is separated from the seal guide mechanism 74, the seal guide mechanism 74 is naturally folded into the flat shape to lower the sealing member 34.

The lift mechanism 45 for the sealing member 34 includes the gear arm 66, the seal driving cam 71, and the seal guide mechanism 74.

The front moving mechanism 52 and the upper moving mechanism 53 will now be described. As shown in FIGS. 5 and 6, a pair of support shafts 75a and 75b is provided along both the side parts of the sealing member 34 opening and closing the opening 33 of the dust box 32. As described above with reference to FIG. 12, end parts (right end parts) of the support shafts 75a and 75b are fitted in and fixed to front-part gear Ef and upper-part gear Fu constituting the gear train, respectively. Actually, the front-part gear Ef is attached to the support shaft 75a on the left side of FIGS. 5 and 6, and the upper-part gear Ff is attached to the support shaft 75b on the right side of FIGS. 5 and 6.

The other end part (left end part) of each of the support shafts 75a and 75b is rotatably supported by the frame body assembly 16 through a bearing. Intermediate parts of the support shaft 75a and 75b, which face the center reinforcing crosspiece Xa of the divided front and upper air filters 17 and 20, are fitted in and fixed to a front air filter driving gear 76 and an upper air filter driving gear 77 respectively. The front and upper air filter driving gears 76 and 77 are partially projected toward the front-face side and upper-face side from the opening provided in the frame body assembly 16.

So-called racks (spur gears) 78 are provided along the lengthwise direction in the backsides of the center reinforcing crosspieces Xa. The front and upper air filter driving gears 76 and 77, which are so-called pinions projected from the opening of the frame body assembly 16, are engaged with the racks 78. The embodiment is not limited to the rack 78 provided in the center reinforcing crosspiece Xa, and continuous grooves or holes made at predetermined intervals may be provided in the center reinforcing crosspiece Xa while means for engaging the grooves or holes are provided in the support shaft 75a and 75b.

In particular, as shown in FIG. 6, shaft centers of the front air filter driving gear 76 and upper air filter driving gear 77 are set at positions where the shaft centers constitute an isosceles triangle, the vertex of which is the shaft center of the rotating brush 30.

When the front-part gear Ef constituting the gear train is rotated, the front air filter driving gear 76 provided in the support shaft 75a is rotated to move and bias the front air filter 17 in the rotation direction of the front air filter driving gear 76 due to the relationship between the pinion and the rack. When the upper-part gear Fu constituting the gear train is rotated, the upper air filter driving gear 77 provided in the support shaft 75b is rotated to move and bias the upper air filter 20 in the rotation direction of the upper air filter driving gear 77, due to the relationship between the pinion and the rack.

Thus, the front moving mechanism 52 moving the front air filter 17 is formed by the front air filter driving gear 76 and the rack 78 provided in the front air filter 17. The upper moving mechanism 53 moving the upper air filter 20 is formed by the upper air filter driving gear 77 and the rack 78 provided in the upper air filter 20.

A front guide 80 and an upper guide 85 are provided in the box case 32a constituting the dust box 32. That is, the front guide 80 and the upper guide 85 are integrally attached to the air filter cleaning unit S.

The front guide 80 is provided over the width direction of the box case 32a, and the front guide 80 includes a front guide shaft 81 formed by a stainless steel rod. The front guide shaft 81 is located on the upper-face side of the frame body assembly 16, and the front guide shaft 81 is provided in parallel with the support shaft 75a fitted in the front air filter driving gear 76 through the frame body assembly 16.

Spacing retainers 82 retaining spacing between the dust box 32 and the front guide shaft 81 are provided in the side parts and central part of the front guide shaft 81. The spacing retainer 82 includes a projection 82a which can be brought into contact with and separated from a corner part of the box case 32a. The projection 82a abuts on the box case 32a, whereby not only the position of the front guide shaft 81 is fixed, but also the spacing between the dust box 32 and the front guide shaft 81 is evenly set over the total lengths of the dust box 32 and front guide shaft 81.

A filter guide 83 is attached to the front guide shaft 81 at a region where the filter guide 83 faces the center reinforcing crosspiece Xa of the divided front air filter 17. The filter guide 83 has a deformed elliptical shape in section, a surface of the filter guide 83 is formed by a flat and smooth synthetic resin material, and the filter guide 83 has a width slightly larger than that of the center reinforcing crosspiece Xa.

Guide collars Xt are provided on the upper-face side of each filter guide 83 and in the side parts in the width direction of the filter guide 83, and the center reinforcing crosspiece Xa can be fitted between the guide collars Xt. Usually a part of the filter guide 83 on the lower-end side of the circumferential surface is assembled so as to contact the upper face of the center reinforcing crosspiece Xa of the front air filter 17.

Similarly, the upper guide 85 is provided over the width direction of the box case 32, and the upper guide 85 includes an upper guide shaft 86 formed by a stainless steel rod. The upper guide shaft 86 is located on the upper-face side of the frame body assembly 16, and the upper guide shaft 86 is provided in parallel with the support shaft 75b fitted in the upper air filter driving gear 77 through the frame body assembly 16.

Although not particularly shown, spacing retainers retaining the spacing between the dust box 32 and the upper guide shaft 86 are also provided in the side parts and central part of the upper guide shaft 86. The spacing retainer includes a projection which can be brought into contact with and separated from the corner part of the box case 32a. The projection abuts on the box case 32a, whereby not only the position of the upper guide shaft 86 is fixed, but also the spacing between the dust box 32 and the upper guide shaft 86 is evenly set over the total lengths of the dust box 32 and upper guide shaft 86.

A filter guide 88 is attached to the upper air filter 20 at a region where the filter guide 88 faces the center reinforcing crosspiece Xa of the divided upper air filter 20. The filter guide 88 has a deformed elliptical shape in section, a surface of the filter guide 88 is formed by a flat and smooth synthetic resin material, and the filter guide 88 has a width slightly larger than that of the center reinforcing crosspiece Xa.

The guide collars Xt are provided on the upper-face side of each filter guide 88 and in the side parts in the width direction of the filter guide 88, and the center reinforcing crosspiece Xa can be fitted between the guide collars Xt. Usually, a part of the filter guide 88 on the lower-end side of the circumferential surface is assembled so as to contact the upper face of the center reinforcing crosspiece Xa of the upper air filter 20.

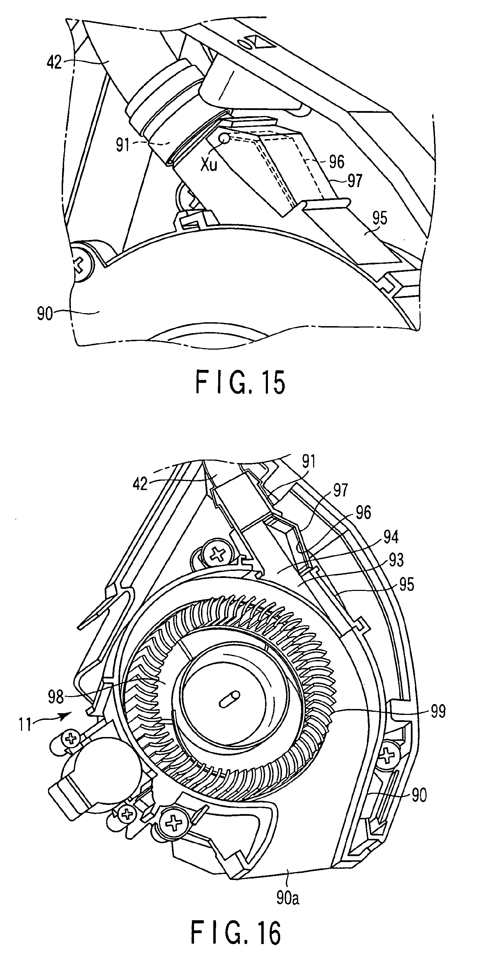

FIG. 14 is a perspective view explaining a connection structure between the air filter cleaning unit S and the ventilation unit 11, FIG. 15 is a perspective view partially showing an inside of the ventilation unit 11, and FIG. 16 is a perspective view showing a state in which a side-face cover of the fan casing 90 constituting the ventilation unit 11 is detached.

Originally, the ventilation unit 11 has a function of exhausting primary-side or secondary-side air to the outside after taking the indoor air into the indoor apparatus body 1. Additionally, the ventilation unit 11 also acts as the suction/exhaust air system which sucks the dust collected by the air filter cleaning unit S from the front air filter 17 and upper air filter 20 and exhausts the dust to the outside. Accordingly, the suction/exhaust air system will be described as the ventilation unit 11.

As described above with reference to FIG. 10B, in the dust box 32 constituting the air filter cleaning unit S, the dust outlet cover 40 is attached to the side end part, and the dust outlet cover 40 is accommodated in the outlet box 41 provided in the frame body assembly 16 while the air filter cleaning unit S is attached to the frame body assembly 16.

As shown in FIG. 14, the hose connection port 41a is integrally provided in the outlet box 41, and one of the end parts of the connection hose 42 is connected to the hose connection port 41a. The connection hose 42 is formed so as to form a gently curved line, and the connection hose 42 is connected to a connection port 91 provided in the ventilation unit 11. As described later, because the dust removed from the front and upper air filters 17 and 20 flows through the connection hose 42, consideration is made such that the connection hose 42 is not clogged by the dust.

As shown in FIG. 15, an attaching hole 93 is made in the fan casing 90 constituting the ventilation unit 11, and a dust guiding case 95 is attached to the outer circumferential surface of the fan casing 90 so as to be communicated with the attaching hole 93. The dust guiding case 95 includes the connection port 91 and a dust outlet passage 94. The connection hose 42 extended from the air filter cleaning unit S is connected to the connection port 91, and the connection hose 42 is communicated with the inside of the fan casing 90 of the ventilation unit 11 through the dust outlet passage 94.

A wind power damper 96 is provided in a middle part of the dust outlet passage 94 in the dust guiding case 95, and the wind power damper 96 is covered with a damper case 97. The dust guided from the connection hose 42 to the dust outlet passage 94 is introduced to the fan casing 90 of the ventilation unit 11 through the wind power damper 96.

The wind power damper 96 is formed by a plate piece which is bent into an inverted V-shape when viewed from the side face, and the damper case 97 is formed so as to correspond to the shape of the wind power damper 96 and projected from the dust guiding case 95. One end of the wind power damper 96 is rotatably supported by the dust guiding case 95 through a support shaft Xu, and the other end of the wind power damper 96 hangs on the dust outlet passage 94 to close the dust outlet passage 94.

When wind of a predetermined pressure or more is applied to the connection hose 42, the other end of the wind power damper 96 is pushed upward to open the dust outlet passage 94 by the wind pressure. When wind below a predetermined pressure is applied, the wind power damper 96 closes the dust outlet passage 94 again.

As shown in FIG. 16, the ventilation unit 11 includes a ventilation passage opening/closing damper 98, a mechanism driving the damper 98, and a blower mechanism. The ventilation passage opening/closing damper 98 is provided in a ventilation suction port opened at a center part of the side face of the fan casing 90. The blower mechanism, such as a ventilation fan 99, is disposed in the fan casing 90.

The ventilation passage opening/closing damper 98 includes a circular plate-shaped partition plate and a circular plate-shaped damper. The ventilation suction port is covered with the circular plate-shaped partition plate. The circular plate-shaped damper is rotatably disposed in a surface. Openings are provided in predetermined regions of the partition plate and damper, respectively. That is, the damper is rotated to overlap the opening positions of the partition plate and damper, whereby the openings of the partition plate and damper are communicated with each other.

One of the openings is communicated with a secondary-side space of the heat exchanger 8, and the other opening is communicated with a primary-side space of the heat exchanger 8 and is then guided to the heat exchanger 8 through the front and upper air filters 17 and 20. A mechanism driving the ventilation passage opening/closing damper 98 rotates the opening and closing damper 98 based on a control signal.

When a secondary-side ventilation mode is selected, heat exchanger secondary-side air passing through the heat exchanger 8 is guided to the ventilation fan 99. When a primary-side ventilation mode is selected, the heat exchanger primary-side air is guided to the ventilation fan 99 and is then guided to the heat exchanger 8 through the front and upper air filters 17 and 20. When a fully closed mode is selected, the ventilation suction port is closed.

The fan casing 90 includes an exhaust port 90a, and an exhaust duct is connected to the exhaust port 90a. The region ranging from the attaching hole 93 to which the dust guiding case 95 is attached to the fan casing 90 where the exhaust port 90a is provided is set so as to be farthest away from the front end of the ventilation fan 99. The exhaust duct is projected to the outside of the room while piercing through the wall to which the indoor apparatus body 1 is attached, and the blower mechanism constituting the ventilation unit 11 is communicated with the outside through the exhaust duct.

The secondary-side ventilation mode or the primary-side air ventilation mode is selected, the ventilation suction port of the fan casing 90 is opened by switching the ventilation passage opening/closing damper 98, and the ventilation fan 99 is rotated in the fan casing 90. Therefore, the heat exchanger secondary-side air or the heat exchanger primary-side air is discharged to the outside, i.e., ventilation action is performed. The secondary-side ventilation mode and the primary-side air ventilation mode are selected depending not only on the state of the room to be air-conditioned, but also on the state of the indoor apparatus body. When the fully closed mode is selected, the opening and closing damper 98 closes the ventilation suction port.

The connection hose 42 communicating the air filter cleaning unit S with the ventilation unit 11 is connected to the dust guiding case 95 provided between the ventilation suction port and exhaust port 90a of the fan casing 90. Therefore, when the ventilation suction port is closed to rotate the ventilation fan 99, a negative pressure is applied onto the side of the air filter cleaning unit S through the connection hose 42.

Next, the action of the indoor apparatus for air conditioner having the above-described configuration will be described. When a user presses an operation button of a remote controller, the indoor blower 10 is driven and the air cleaner unit 18 is actuated. A compressor is driven to start a refrigerating cycle running in outdoor apparatus communicated with the indoor apparatus through a refrigerant pipe.

The indoor air is guided into the indoor apparatus body 1 from the front suction port 4 and upper suction port 5, and the indoor air passes through the evenly-divided front air filter 17 and upper air filter 20. At this point, the dust containing the indoor air is trapped by the front air filter 17 and upper air filter 20. The indoor air, from which the dust has been removed by the front air filter 17, passes through the pair of electric dust collectors 22 constituting the air cleaner unit 18, whereby the finer dust is electrically collected and deodorized.

The cleaned indoor air is circulated through the heat exchanger 8, and a heat exchange action is performed between the indoor air and the refrigerant. Then, the heat exchange air is guided along the blow-out air duct 15, the heat exchange air is guided from the air outlet 6 to the blow-out louvers 7a and 7b, and the air is blown out into the room to continue efficient air conditioning running.

An "air filter cleaning mode" is automatically performed when the user operates the remote controller to select the "air filter cleaning mode", or after the air conditioning running is performed in each predetermined period, or at a predetermined set time, or during a predetermined set time.

In response to the selection of the air filter cleaning mode, the control portion sends the driving signal to the first driving motor 46, second driving motor 47, and third driving motor 48 in the driving portion. In the beginning, the front moving mechanism 52 constituting the air filter moving mechanism 55 is driven and the brush driving mechanism is actuated at the same time. The driving signal is previously sent to the fourth driving motor 49 when the selection of the air filter cleaning mode is ended, and the switch mechanism 61 coupled to the fourth driving motor 49 switches the gear D to the position where the gear D is engaged with the front-part gear Ef.

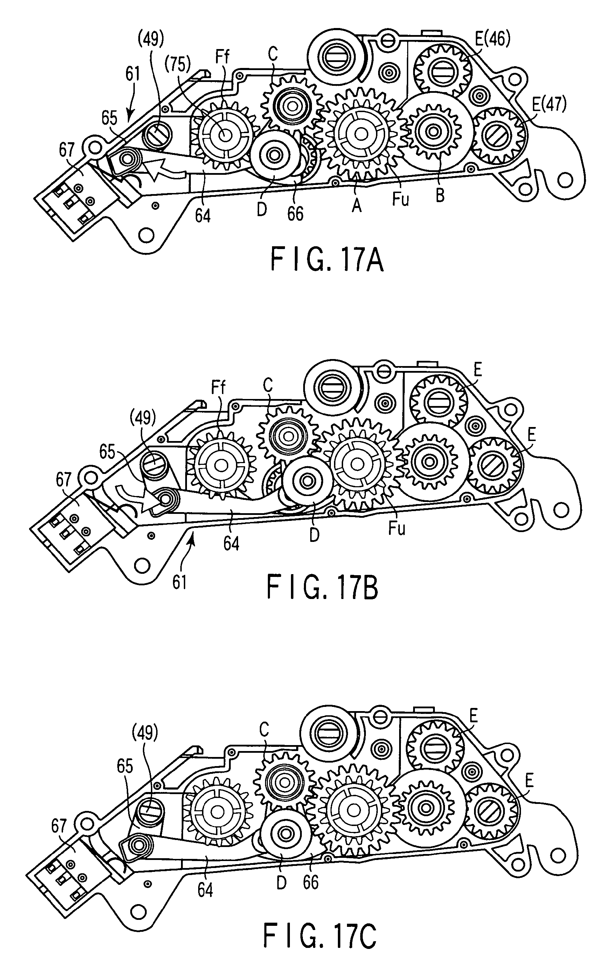

Specifically, as shown in FIG. 17A, the driving arm 64 of the switch mechanism 61 is totally moved and biased in an arrow direction (left side), and the gear D is engaged with the front-part gear Ef and engaged with the gear C.

At this point, the pair of gears E is rotated in the same direction by driving the first and second driving motors 46 and 47. The gear B is rotated through the gears E, and the torque is transmitted to the gear C from the gear A engaged with the gear B.

The torque is transmitted from the gear C to the front-part gear Ef through the gear D, thereby rotating the support shaft 75 supporting the front-part gear Ef. The front air filter driving gear 76 is provided in the support shaft 75a, and the front air filter 17 is pressed against the front guide 80 from the upper-face side and engaged with the rack 78 of the center reinforcing crosspiece Xa.

When the front air filter driving gear 76 is rotated, the divided front air filters 17 start the movement by the same amount at the same time. Each divided front air filter 17 gradually goes out from the air filter accommodation portion 16b on the front-face side, and the side parts of the front air filter 17 are guided by the guide portion of the frame body assembly 16 and moved upward.

At this point, the seal driving cam 71 constituting the lift mechanism 45 is separated from the seal guide mechanism 74, the seal guide mechanism 74 is folded into a flat shape, and the sealing member 34 is located at the lowered position to open the opening 33 of the dust box 32.

Accordingly, the front air filter 17 is inserted into a gap formed between the lower end of the dust box 32 and the sealing member 34. At the same time, the brush driving mechanism is actuated to rotate the rotating brush 30 clockwise in FIGS. 5 and 6. The front air filter 17 sequentially faces the rotating brush 30 from the upper end toward the lower-end side, and the front air filter 17 is moved upward while sliding onto the rotating brush 30.

The dust adhering to the front air filter 17 is scratched and removed smoothly and surely by the rotating brush 30. That is, because the rotating brush 30 is horizontally divided for the horizontally-divided front air filters 17, a variation in contact with each divided front air filter 17 can be decreased to enhance the dust scratching effect.

The horizontally-divided rotating brushes 30 are integrally rotated. Because the two front air filter driving gears 76 constituting the front moving mechanism 52 are simultaneously rotated while provided in the one support shaft 75a for the divided front air filters 17, the divided front air filters 17 can simultaneously be moved by the same amount.

The dust is transferred from the front air filter 17 to the rotating brush 30. Immediately after the dust is transferred, the rotating brush 30 contacts and passes through the scratching projection 35. Because the scratching projection 35 is formed like the teeth of a comb, the dust transferred to the rotating brush is scratched and falls into the dust receiving passage 31. The dust receiving passage 31 has a closed structure except for the region facing the rotating brush 30, which is opened, so that the scratched dust is not spread around the area surrounding the dust receiving passage 31.

Thus, immediately after the front air filter 17, in which is contained the dust that has been removed, is removed away from the contact region of the rotating brush 30 of the dust box 32, the upper-end edge of the front air filter 17 is guided to the gap between the upper guide 85 and the corner part of the dust box 32. Because the gap is set and retained correctly and evenly by the spacing retainer 82, the front air filter 17 passes smoothly through the gap.

The center reinforcing crosspiece Xa slides on the filter guide 88 constituting the upper guide 85 when the front air filter 17 passes through the gap. Specifically, the center reinforcing crosspiece Xa slides along the guide collar Xt provided in the filter guide 88. Additionally, because the side parts of the front air filter 18 are guided along the guide portions projected in the frame body assembly 16, the front air filter 18 is moved upward with no inclination in the width direction, retaining the correct attitude.

Eventually, while the dust is removed by the rotating brush 30, each front air filter 17 is inserted into the upper-face-side air filter accommodation portion 16c which is provided in the frame body assembly 16 to accommodate the upper air filter 20. That is, the front air filters 17 are guided onto the upper-part side of the upper air filter 20 so as to face each other across a narrow gap. The control portion performs control such that the first and second driving motors 46 and 47 are tentatively stopped when the upper end of the front air filter 17 is inserted into the rear end of the air filter accommodation portion 16c on the upper-face side.

Accordingly, the front air filters 17 are reciprocally moved, and the dust is removed over the front air filter 17 by the air filter cleaning unit S during this time. The front air filters 17 are accommodated in the upper-face-side air filter accommodation portion 16c while facing the upper air filter 20. At this point, the surrounding frame at the lower end of the front air filter 17 is located in the dust box 32, and the center reinforcing crosspiece Xa is pressed against the filter guide 88 to maintain the engagement between the rack 78 and the front air filter driving gear 76.

Then, the control portion sends the driving signal to the first and second driving motors 46 and 47 to reversely rotate the first and second driving motors 46 and 47. The control portion performs control of the third driving motor 48 such that a rotation speed is enhanced while the rotation direction is not changed. The gears constituting the gear train are reversely rotated, and the front moving mechanism 52 simultaneously lowers the divided front air filters 17 by the same amount. The fourth driving motor is kept in the stopped state.

Substantially all of the dust is removed from the front air filters 17 by the dust removing action. However, sometimes some dust may remain in the front air filter 17, depending on the conditions. Therefore, in order to surely remove all the remaining dust, the front air filter 17 slides on the rotating brush 30 when the front air filter 17 is lowered.

Because the rotation direction of the rotating brush 30 is not changed, the dust transferred to the rotating brush 30 is removed from the rotating brush 30 by the scratching projection 35, and the dust falls into the dust receiving passage 31, without being scattered around..

The front air filters 17 are returned from the upper-face-side air filter accommodation portion 16c to the front-face-side air filter accommodation portion 16b. The side parts of the front air filter 17 are guided by the guide portions of the frame body assembly 16, and the front air filter 17 is smoothly moved with no attitude inclination.

Finally, the front air filters 17 are completely returned to the original air filter accommodation portion 16b on the front-face side. When the control portion detects that the front air filters 17 are completely returned, the control portion sends a stop signal to the first and second driving motors 46 and 47. Thus, the dust removing action is ended for the front air filters 17.

Then, the control portion sends the driving signal to the fourth driving motor 49 to actuate the switch mechanism 61. As shown in FIG. 17B, the fourth driving motor 49 is driven from the state shown in FIG. 17A in order to rotate the driving lever 65 counterclockwise. The driving arm 64 coupled to the driving lever 65 is moved in the right direction of FIG. 17B, and the gear D supported by the driving arm 64 is engaged with the upper-part gear Fu and with the gear C. Accordingly, the torque transmitted from the first and second driving motors 46 and 47 to the gear D is in turn transmitted to the upper-part gear Fu.

Due to the movement of the driving arm 64, the gear arm 66 coupled to the driving arm 64 is rotated by a predetermined angle about the support shaft part p. The switching gear 69 engaged with the inner gear portion 68 of the gear arm 66 is rotated to rotate the sealing support shaft 70 and the seal driving cam 71. The cam portion Xq provided in the seal driving cam 71 is separated from the seal guide mechanism 74, and the seal guide mechanism 74 is folded into a flat shape.

Although the cam portion Xq contacts the seal guide mechanism 74 to push up the sealing member 34 during the rotation of the seal driving cam 71, the seal driving cam 71 is continuously rotated to separate the cam portion Xq from the seal guide mechanism 74 again. Accordingly, the seal guide mechanism 74 is folded into a flat shape again, and the sealing member 34 is separated from the opening 33 of the dust box 32 to form a gap therebetween.

The control portion sends the driving signal to the first and second driving motors 46 and 47, and the control portion sends the driving signal to the third driving motor 48 so as to set the same rotation speed as that in returning the upper air filter 20. The upper moving mechanism 53 is actuated, the divided upper air filters 20 move away from the air filter accommodation portion 16c on the upper-face side, and the upper air filters 20 are delivered by the same amount so as to face the front air filters 17 accommodated in the air filter accommodation portion 16b on the front-face side. The upper air filters 20 pass through the dust box 32 midstream and the dust is removed by the rotating brush 30.

Similarly, the dust removed from the upper air filter 20 by the rotating brush 30 is surely collected in the dust receiving passage 31, without being scattered around. The upper guide 85 presses the upper air filter 20 against the upper air filter driving gear 77 to surely engage the upper air filter driving gear 77 with the rack 78 of the center reinforcing crosspiece Xa. The front-part guide 17 and the guide portion smoothly guide and move the upper air filters 20 without inclining the upper air filters 20.

The upper air filters 20 are moved to a position in front of the front air filters 17, in the face-side air filter accommodation portion 16b, while the upper air filters 20 are separated by a narrow gap. Then, the control portion performs control so as to temporarily stop the first and second driving motors 46 and 47. The control portion sends a driving signal to the first and second driving motors 46 and 47 to reversely rotate the first and second driving motors 46 and 47, and the gears constituting the gear train and the upper air filter driving gear 77 are reversely rotated to return the upper air filter 20.

The control portion sends a driving signal to the third driving motor 48, and the control portion keeps the fourth driving motor 49 in the stopped state. Because the rotating brush 30 is rotated in the clockwise direction, which is the opposite direction to the upwardly-moved upper air filter 20, even if dust remains in the upper air filter 20, the dust can surely be removed.

Similarly, the upper air filters 20 are smoothly moved with no inclination while guided by the front guide 80 and the guide portion of the frame body assembly 16. When the upper air filters 20 are returned to the upper-face-side air filter accommodation portion 16c again, the control portion sends the stop signal to the first and second driving motors 46 and 47 and the third driving motor 48. Thereby, the dust removing action is ended for all the surfaces of the upper air filters 20.

In the embodiment, after the front air filters 17 are reciprocally moved to completely remove the dust, the upper air filters 20 are reciprocally moved to completely remove the dust. However, the invention is not limited to the embodiment. Alternatively, the front air filters 17 may be reciprocally moved to remove the dust after the upper air filters 20 are reciprocally moved to remove the dust.

That is, one of the front air filter 17 and the upper air filter 20 is reciprocally moved with respect to the air filter cleaning unit S to remove the adhering dust, and the other air filter is reciprocally moved with respect to the air filter cleaning unit S to remove the adhering dust. Alternatively, sensors detecting amounts of adhering dust in the front air filter 17 and the upper air filter 20 may be provided to perform the dust removing action on the air filter having a large amount of adhering dust.

When the cleaning running is completed on the divided front air filters 17 and upper air filters 20, the control portion sends a driving signal to the fourth driving motor 49 to actuate the lift mechanism 45. That is, the fourth driving motor 49 is reversely rotated from the state shown in FIG. 17B, a part of the driving arm 64 turns on the micro switch 67 as shown in FIG. 17C, and the control portion receives the turn-on signal of the micro switch 67 to stop the fourth driving motor 49.

The gear D supported by the driving arm 64 is separated from the front-part gear Ff to disengage the engagement, and the gear D is also separated from the upper-part gear Fu. The gear D is located at the midpoint between the upper-part gear Fu and the front-part gear Ef, and the gear D is engaged only with the gear C. The gear arm 66 coupled to the driving arm 64 is located at the substantially vertical position, and the cam portion Xq of the seal driving cam 71 provided in the sealing support shaft 70 is also located at the substantially vertical position.

As shown in FIG. 13, the seal guide mechanism 74 performs the rising operation by the cam portion Xq, and the sealing member 34 attached to the seal base 73 is raised and brought into close contact with the lower face of the dust box 32. Accordingly, the opening 33 provided in the lower face of the dust box 32 is fully closed by the sealing member 34.

Then, the control portion selects a ventilation damper fully-closed mode for the ventilation unit 11, and the control portion sends the driving signal to the ventilation fan 99. A negative pressure is applied to the dust outlet passage 94 of the dust guiding case 95 in accordance with the rotation of the ventilation fan 99, thereby opening the wind power damper 96 provided in the dust outlet passage 94. Accordingly, the negative pressure acts on the air filter cleaning unit S from the dust guiding case 95 through the connection hose 42 and the outlet box 41.

Specifically, the negative pressure generated by the rotation of the ventilation fan 99 is applied to the dust receiving passage 31 through the dust outlet cover 40 covered with the outlet box 41, thereby sucking the dust collected in the dust receiving passage 31. Because one of the end parts of the dust receiving passage 31 is communicated with the air entrance hole 39 provided in the end part of the box case 32a, the air around the dust box 32 is forcedly sucked from the air entrance hole 39 to the dust receiving passage 31. Therefore, the dust collected in the dust receiving passage 31 is removed by the sucked air, and the dust is removed from the dust box 32 and is guided to the connection hose 42.

Additionally, an appropriate material is selected for the dust box 32, a surface treatment is performed on the dust box 32, and the whole dust receiving passage 31 is configured such that the dust easily passes therethrough. Therefore, the dust is discharged rapidly and surely without remaining in the dust receiving passage 31, and the dust is sucked from the connection hose 42 to the ventilation unit 11.

The dust guided from the connection hose 42 through the connection port 91 of the dust guiding case 95, the dust outlet passage 94 opened by the wind power damper 96, and the attaching hole 93 of the fan casing 90 is moved along the inner circumferential surface of the fan casing 90 and discharged from the exhaust port 90a to the outside.

Of the distance from the front-end edge of the ventilation fan 99 to the surrounding wall of the fan casing 90, the distance between the attaching hole 93 and the exhaust port 90a is larger than that of other regions, and the dust collected in the dust receiving passage 31 is guided to the site located between the attaching hole 93 and the exhaust port 90a. Accordingly, the amount of dust adhering to the front-end edge of the ventilation fan 99 can be suppressed to maintain the cleanness of the ventilation fan 99 for a long time.

As described above, the frame body assembly 16 including the front air filter 17, the upper air filter 20, and the air cleaner unit 18 can be attached to the existing indoor apparatus body 1. However, there is also a type of air conditioner in which ventilation unit 11 is not provided in the existing indoor apparatus. In such cases, the air filter cleaning unit S in which an air entrance hole is not made in one of the side parts of the dust box 32 and a dust outlet cover is not provided in the other side part is attached to the existing indoor apparatus body 1.

Even in the air filter cleaning unit, the dust adhering to the front air filter 17 and the upper air filter 20 can surely be removed and collected in the dust receiving passage 31. The user periodically opens the front-face panel 2 to expose the air filter cleaning unit S, and the user detaches the air filter cleaning unit S. The user easily detaches the air filter cleaning unit S, because the air filter cleaning unit S is detachably attached to the air filter cleaning unit attaching portion 16d of the frame body assembly 16.

At this point, the collected dust remains in the dust receiving passage 31, and the box case 32a and box cover 32b constituting the dust box 32 are combined to form a substantially closed structure. Therefore, the dust in the dust box 32 does not spread to the surrounding area during the detachment of the air filter cleaning unit S. When the air filter cleaning unit S is placed in a lower place to open the box cover 32b from the box case 32a, the user can confirm that the dust is collected in the dust receiving passage 31 in the box case 32a, so that the user can remove the dust with a cleaner.

That is, an air conditioner having the automatic air filter cleaning function can be formed by attaching the frame body assembly 16 to the existing indoor apparatus, thus the air conditioner can continue to be used.

Thus, the front air filter 17 and the upper air filter 20, which face the front suction port 4 and the upper suction port 5 respectively, are separately formed in the indoor apparatus body 1 according to the invention. After the adhering dust is removed by reciprocally moving one of the air filters, e.g., the front air filter 17 with respect to the air filter cleaning unit S, the dust is removed by reciprocally moving the other air filters, e.g., the front air filter 20.

Accordingly, in comparison with the conventional indoor apparatus, including the one air filter facing both the front suction port and the upper suction port, the moving amounts of the front and upper air filters 17 and 20 become half during removing the dust, and the dust removing time is halved, which improves workability. The cleaning running need only be performed on one of the front and upper air filters 17 and 20, according to the amount of dust adhering. Because the position where one of the air filters is moved is identical to the position where the other air filter is disposed, it is not necessary to ensure the space to which the air filter is moved.

The air filters are moved in air filter cleaning unit S while intersecting each other, and the air filters are not projected from the indoor apparatus body 1, so that aesthetics is improved. Compared with the conventional method for winding the air filter about the shaft, the air filter structure and the air filter cleaning unit structure can be simplified. Downsizing and simplification can be achieved to improve the durability and reliability.

The dust adhering to both the air filters 17 and 20 is removed by the one rotating brush 30 constituting the dust removing means included in the air filter cleaning unit S, so that a compact air filter cleaning unit S can be realized, which reduces the overall footprint.

The dust collected in the air filter cleaning unit S is discharged to the outside by utilizing the ventilation unit 11, which is the suction/exhaust air system, which saves the trouble of the cleaning. At this point, because the opening 33 formed in the dust box 32 is closed by the sealing member 34, air leakage is not generated in the dust receiving passage 31, and the dust sucking action is extremely effectively applied.

Additionally, according to the invention, the moving amounts of the front and upper air filters 17 and 20 are halved, and the dust removing time is halved compared with the conventional air filter formed from the front face to the upper face. Because of the small moving amounts of air filter, in removing the dust with the rotating brush 30, the guide air filter 17 is simply moved to the upper-face-side air filter accommodation portion 16c in which the upper air filter 20 is accommodated. The upper air filter 20 is also simply moved to the front-face-side air filter accommodation portion 16b, in which the front air filter 17 is accommodated. The dust removing time can be shortened because of the small moving amounts of the front and upper air filters 17 and 20, and the front and upper air filters 17 and 20 are smoothly moved because of the short moving distance.

The front and upper air filters 17 and 20 are moved to pass through the air filter cleaning unit S, so that the dust adhering to each of the air filters 17 and 20 can be removed. Because the air filter cleaning unit S is disposed in the dead space above the front face of the indoor apparatus body 1, the air filter cleaning unit S can be accommodated without enlarging the depth and height of the indoor apparatus body 1, and the air filter cleaning unit S can easily be attached to the conventional air conditioner.

Because the air filter moving mechanism 55 and the air filter cleaning unit S are disposed close to each other, the contact with the rotating brush 30, which is the dust removing means of the air filter cleaning unit S, can stably be performed. The front guide 80 and the upper guide 85 act as a guide while pressing the floating of the front air filter 17 and upper air filter 20, when the front moving mechanism 52 and upper moving mechanism 53 move the front air filter 17 and upper air filter 20. Therefore, the air filters 17 and 20 are surely guided.

The front guide 80 and the upper guide 85 are attached to the side of the front air filter 17 and the side of the upper air filter 20, so that the distance with the air filter cleaning unit S can always be kept constant. The variation in movement between each of the air filters 17 and 20 and the air filter cleaning unit S can be suppressed during the movements of air filters 17 and 20. Each of the front and upper guides 80 and 85 includes the spacing retainer 82 to fix the distance with the air filter cleaning unit S, so that the air filters can correctly be moved.

According to the invention, the air filter cleaning unit is disposed in the dead space of the indoor apparatus body, which enables the air filter cleaning unit to be attached to the existing indoor apparatus body. Furthermore, the air filter moving mechanism is disposed close to the air filter cleaning unit, so that the air filters can stably and surely be guided with respect to the air filter cleaning unit. Additionally, the positional relationship between the air filter cleaning unit and the air filter guide is normally retained to stably move the air filters by setting the position of the air filter guide with respect to the air filter moving mechanism.

The invention is not limited to the embodiment, and various modifications can be made without departing from the scope of the invention. Additionally, various modifications can also be made by appropriately combining plural constituents disclosed in the embodiment.

### Industrial Applicability

The invention provides the indoor apparatus for an air conditioner, which includes a means for automatically removing dust from an air filter without enlarging the indoor apparatus body, whereby the trouble can be saved to shorten the dust removing time.

## Claims

1. An indoor apparatus for an air conditioner, in which suction ports are provided in a front face and an upper face of an indoor apparatus body accommodating a heat exchanger and a blower therein, the front face and the upper face the heat exchanger, and an air filter is provided between the suction ports and the heat exchanger to trap dust from sucked indoor air,
**characterized in that**:
the air filter is interposed between the front-face suction port and upper-face suction port and the heat exchanger, and is supported while being able to be movable upward and frontward;
an air filter cleaning unit which is disposed in a space facing a region located between the front-face suction port and the upper-face suction port of the indoor apparatus body, the air filter cleaning unit including a dust removing mechanism and a dust receiving portion, the dust removing mechanism removing the adhering dust from the moving air filter, the dust receiving portion recovering the removed dust; and
air filter moving means for moving the air filter while the air filter cleaning unit is interposed, whereby the air filter moving means causes the air filter cleaning unit to clean the air filter.

2. An indoor apparatus for an air conditioner in which suction ports are provided in a front face and an upper face of an indoor apparatus body accommodating a heat exchanger and a blower therein, the front face and the upper face facing the heat exchanger, and an air filter is provided between the suction ports and the heat exchanger to trap dust from sucked indoor air,
**characterized in that**:
the air filter is divided into a front air filter and an upper air filter, the front air filter being interposed between the front-face suction port and the heat exchanger, the front air filter being supported while being able to be movable upward, the upper air filter being interposed between the upper-face suction port and the heat exchanger, the upper air filter being supported while being able to be movable frontward;
an air filter cleaning unit which is disposed in a space facing a region located between the front-face suction port and the upper-face suction port of the indoor apparatus body, the air filter cleaning unit including a dust removing mechanism and a dust receiving portion, the dust removing mechanism removing the adhering dust from the moving front air filter and upper air filter, the dust receiving portion recovering the removed dust; and
air filter moving means for reciprocally moving the front air filter to a position facing the upper air filter while the air filter cleaning unit is interposed, and reciprocally moving the upper air filter to a position facing the front air filter while the air filter cleaning unit is interposed, whereby the air filter moving means causes the air filter cleaning unit to clean the front air filter and upper air filter.

3. An indoor apparatus for an air conditioner in which suction ports are provided in a front face and an upper face of an indoor apparatus body accommodating a heat exchanger and a blower therein, the front face and the upper face facing the heat exchanger, and an air filter is provided between the suction ports and the heat exchanger to trap dust from sucked indoor air,
**characterized in that**:
the air filter is divided into a front air filter and an upper air filter, the front air filter being interposed between the front-face suction port and the heat exchanger, the front air filter being supported while being able to be movable upward, the upper air filter being interposed between the upper-face suction port and the heat exchanger, the upper air filter being supported while being able to be movable frontward;
an air filter cleaning unit which is disposed in a space facing a region located between the front-face suction port and the upper-face suction port of the indoor apparatus body, the air filter cleaning unit including a dust removing mechanism and a dust receiving portion, the dust removing mechanism removing the adhering dust from the moving front air filter and upper air filter, the dust receiving portion recovering the removed dust; and
air filter moving means which is disposed close to the air filter cleaning unit,
wherein the air filter moving means includes:
a front moving mechanism which reciprocally moves the front air filter from the air filter cleaning unit to a position facing the upper air filter;
a front guide which presses and guides the front air filter in a moving direction when the front moving mechanism moves the front air filter;
an upper moving mechanism which reciprocally moves the upper air filter from the air filter cleaning unit to a position facing the front air filter; and
an upper guide which presses and guides the upper air filter in a moving direction when the upper moving mechanism moves the upper air filter.

4. The indoor apparatus for an air conditioner according to claim 3, **characterized in that** the front moving mechanism and upper moving mechanism constituting the air filter moving means are disposed at positions on lower-face sides of the front air filter and upper air filter respectively, the front air filter and the upper air filter being symmetrical in relation to the dust removing mechanism constituting the air filter cleaning unit, and
the front guide and the upper guide are disposed at positions on upper-face sides of the front air filter and upper air filter respectively, the front air filter and the upper air filter being close to the front moving mechanism and the upper moving mechanism.
